(19) Europäisches Patentamt
European Patent Office
Office européen des brevets

(11) **EP 4 082 508 A1**

(12) **EUROPEAN PATENT APPLICATION**
published in accordance with Art. 153(4) EPC

(43) Date of publication:
**02.11.2022 Bulletin 2022/44**

(21) Application number: **20905070.7**

(22) Date of filing: **22.12.2020**

(51) International Patent Classification (IPC):
**A61H 3/04** (2006.01)    **A61G 5/04** (2013.01)
**A61G 5/10** (2006.01)

(52) Cooperative Patent Classification (CPC):
**A61G 5/04; A61G 5/10; A61H 3/04;** Y02T 10/64;
Y02T 10/70; Y02T 10/72

(86) International application number:
**PCT/JP2020/047867**

(87) International publication number:
**WO 2021/132216 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2019  JP 2019235314**

(71) Applicant: **Nabtesco Corporation
Tokyo 102-0093 (JP)**

(72) Inventor: **HASHIMOTO Hiroaki
Tokyo 102-0093 (JP)**

(74) Representative: **Grünecker Patent- und
Rechtsanwälte
PartG mbB
Leopoldstraße 4
80802 München (DE)**

(54) **ELECTRIC WHEELED WALKING AID**

(57)    An electric wheeled walking aid 100 including: wheels 12 and 13 provided on the body of the electric wheeled walking aid; a power generation mechanism configured to generate regenerative electric power in accordance with the rotation of the wheels 12 and 13; and a control device 105 configured to control a brake that applies braking force to the wheels using the regenerative electric power generated by the power generation mechanism.

FIG.3

EP 4 082 508 A1

**Description**

[TECHNICAL FIELD]

The present invention relates to electric wheeled walking aids.

[BACKGROUND ART]

In the related art, for assisting the walking of elderly people and people with weak leg strength, electric wheeled walking aids are known (see, for example, Patent Literatures 1 to 3). An electric wheeled walking aid is used together with a pedestrian (user) at the time of walking. Some electric wheeled walking aids use a torque brake of a motor to keep the aid and the user from being too far apart.

[Patent Literature 1] Japanese Patent Application Publication NO. 2009-183407
[Patent Literature 2] Japanese Patent Application Publication NO. H8-280763
[Patent Literature 3] Japanese Patent Application Publication NO. H11-267162

[SUMMARY OF INVENTION]

[TECHNICAL PROBLEM]

In conventional electric wheeled walking aids, for example, the power of the battery may be exhausted during use due to the charging of the battery being forgotten, and proper operation may not be possible. Therefore, the improvement of this problem is desired.

[SOLUTION TO PROBLEM]

One embodiment of the present invention relates to an electric wheeled walking aid including: wheels provided on the body of the electric wheeled walking aid; a power generation mechanism configured to generate regenerative electric power in accordance with the rotation of the wheels; and a control device configured to control a brake that applies braking force to the wheels using the regenerative electric power generated by the power generation mechanism.

[BRIEF DESCRIPTION OF DRAWINGS]

FIG. 1 is a perspective view of an electric wheeled walking aid according to an embodiment;
FIG. 2 is a lateral view of the electric wheeled walking aid;
FIG. 3 shows the circuit configuration of the electric wheeled walking aid;
FIG. 4A shows a high resistance traveling state; FIG. 4B shows an uphill traveling state; FIG. 4C shows a one-side slope traveling state; and FIG. 4D shows an extremely low speed traveling state;
FIG. 5 shows the relationship between a braking force and a traveling velocity;
FIG. 6A shows the relationship between a brake ratio and a duty ratio according to the first embodiment; and FIG. 6B shows the relationship between a brake ratio and a duty ratio according to the second embodiment;
FIG. 7 illustrates the relationship between the ratio of power supply connection resistance to the resistance of a motor generator and the ratio of the amount of increase in an electric current to the amount of increase in a regenerative voltage;
FIG. 8 shows a circuit configuration of an electric wheeled walking aid according to the third embodiment;
FIG. 9 shows how to store electricity in an electric storage device;
FIG. 10 shows another example of the circuit configuration of the electric wheeled walking aid according to the third embodiment;
FIG. 11 shows a circuit configuration of an electric wheeled walking aid according to the fourth embodiment;
FIG. 12 shows a circuit configuration of an electric wheeled walking aid according to the fifth embodiment; and
FIG. 13 shows a circuit configuration of an electric wheeled walking aid according to the sixth embodiment.

[DESCRIPTION OF EMBODIMENTS]

<First Embodiment>

Hereinafter, an electric wheeled walking aid according to the present embodiment will be described with reference to the drawings. In the following explanation, the same reference numerals are assigned to the same configurations, and repetitive explanations will be omitted.

In the following embodiment, as the electric wheeled walking aid, for example, a wheeled walking aid that assists the elderly in walking will be illustrated. However, as the electric wheeled walking aid, at least any wheeled walking aid vehicle whose brake is controlled by electric power can be adopted. The wheeled walking aid vehicle is driven by rotating the wheels using force input or applied by actions such as pushing by the user to the vehicle as a main driving source. Examples of such a wheeled walking aid vehicle include a wheelchair, a walker for an aged person, a stroller, and a trolley for transporting a load in addition to a wheeled walking aid.

In the present specification, the term "brake" refers to a mechanical brake that causes a friction element such as a brake shoe to come into contact with a wheel or axle by the user's intentional operation to reduce the rotational velocity of the wheel and an electric brake that reduces the rotational velocity of the wheel by recovering the kinetic energy generated by the rotation of the wheel by electric control regardless of the user's intentional operation. The electric brake also includes a brake that rotationally drives the motor in a direction opposite to the normal driving direction to reduce the rotational speed of the wheel. Further, in the present specification, the term "electric wheeled walking aid" means a wheeled walking aid equipped with at least an electric brake. Therefore, even if an electric brake is the only element controlled by electricity in the entire wheeled walking aid, the wheeled walking aid is included as an electric wheeled walking aid.

In the present specification, the "forward direction" means the forward direction in the normal use state of a wheeled walking aid. The "pitch angle" means an angle around an axis (pitch axis) extending in the wheeled walking aid width direction. The "roll angle" means an angle around an axis (roll axis) extending in the front-rear direction of the wheeled walking aid. The "yaw angle" means an angle around an axis (yaw axis) extending in the vertical direction of the wheeled walking aid. The "road surface inclination angle" means the inclination angle of the surface on which the wheeled walking aid is traveling. The inclination angle of the road surface is estimated to be the same as the inclination angle of the wheeled walking aid and is indicated by the angle around the pitch axis or the roll axis or by the combination of the angles around the pitch axis and the roll axis.

[Overall Configuration of Wheeled Walking Aid]

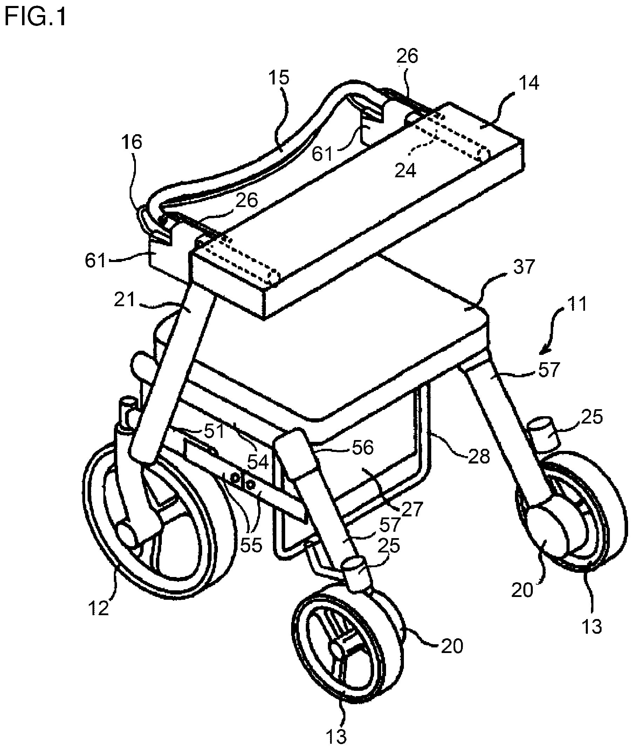

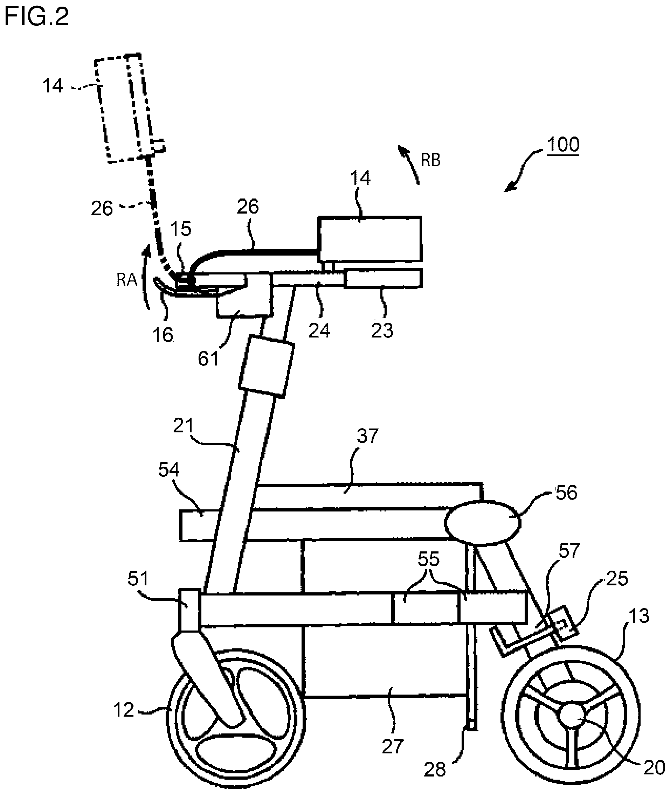

As shown in FIGS. 1 and 2, a wheeled walking aid 100 includes a main body frame 11 of the body of the wheeled walking aid, a pair of front wheels 12 and a pair of rear wheels 13 provided on the main body frame 11 of the body of the wheeled walking aid, and a support pad (body support part) 14 provided on the main body frame 11. The wheeled walking aid 100 assists the walking of an elderly person or a person with weak leg strength. When using the wheeled walking aid 100, while putting his/her forearm or elbow on the support pad 14 and applying the weight (load) to the support pad 14, the user applies force to the wheeled walking aid 100 by pushing a handlebar 15 while grasping the handlebar 15 and a brake lever 16 so as to perform a walking motion. Therefore, the handlebar 15 serves as a receiver configured to receive force from the user, and the wheeled walking aid 100 moves by the force received by the receiver.

The main body frame 11 includes a pair of support frames 21 that are inclined by a predetermined angle from a direction perpendicular to the placement surface of the wheeled walking aid 100. The support frames 21 are formed using pipe-shaped members as an example. A pair of lower frames 51 are horizontally arranged on the lower end side of the support frames 21. A pair of front wheels 12 are attached to the front end side of the lower frames 51. A pair of link mechanisms 55 are provided on the rear end side of the lower frames 51.

A pair of upper frames 54 are provided above the pair of lower frames 51. One end side of a pair of rear wheel frames 57 is rotatably connected to the rear end side of the upper frames 54 via a shaft 56. A pair of rear wheels 13 are provided on the other end side of the rear wheel frame 57, respectively.

A pair of handles 24 are provided at the respective upper ends of the pair of support frames 21. The pair of handles 24 are provided substantially in a horizontal manner with respect to the placement surface of the wheeled walking aid 100. The pair of handles 24 are formed using pipe-shaped members as an example. Each of the pair of handles 24 is provided with a grip 23 (see FIG. 2) held by the user to stabilize the posture when the user is sitting. Further, on the front side of the pair of handles 24, a pipe-shaped handlebar 15 integrated with the handles 24 is formed. One end of the handlebar 15 is connected to one of the pair of handles 24, and the other end of the handlebar 15 is connected to the other handle 24. The handlebar 15 may be formed of a member different from the handles 24.

A pair of mechanically contactable brake shoes 25 (omitted in FIG. 1, see FIG. 2) are provided on the outer circumference of the pair of rear wheels 13. The brake shoes 25 are connected to one end of a brake wire (not shown) arranged in the main body frame 11. The other end of the wire is connected to a wire connection mechanism of a pair of brake units 61 provided on respective sides of the handlebar 15. Although the wire is stored in the main body frame 11, the wire may be formed such that the wire is visible to the user in appearance by arranging the wire outside the main body frame.

A brake lever 16 is arranged in the lower front direction of the handlebar 15 so as to face the handlebar 15. The respective ends of the brake lever 16 are connected to the pair of brake units 61. The respective ends of the brake lever 16 are attached to the brake units 61 via a biasing means such as a coil spring. By pulling the brake lever 16 toward the user (in the direction of an arrow RA in FIG. 2), the user can apply a mechanical brake through wire action. In other words, the brake shoes 25 are controlled by operating the brake lever 16.

At the time of use, the user pulls the brake lever 16 toward the user (in a direction closer to the handlebar 15) to a brake operating position. The action of the wire connected to the brake lever 16 causes the brake shoes 25 to move and press the outer circumference of the rear wheels 13. When the user releases the brake lever 16, the brake lever 16 returns to the original position (normal position). Along with this, the brake shoes 25 are also separated from the rear wheels 13, and the mechanical brake is released. Further, the brake lever 16 can be lowered in the opposite direction (lower side) of the arrow RA. By lowering the brake lever 16 to a parking position, a state in which the rear wheels 13 are being pressed by the brake shoes 25 via the wire action is maintained.

The support pad 14, which is a body support part, is mounted on the pair of handles 24. In the present embodiment, the user's forearms, elbows, or both of these are supported.

The shape of the support pad 14 is a horseshoe shape, a U-shaped straight line shape, or the like. The support pad 14 is formed by placing a cushion material such as a sponge or a rubber material on a plate material such as a wooden plate or a resin plate and covering these materials with an arbitrary covering material made of resin or cloth. Alternatively, the support pad 14 may be composed of only a plate material.

A pair of arm members 26 are fixed, each at one end, to the respective lateral sides of the lower surface of the support pad 14. The arm members 26 are rotatably attached, each at the other end, to the outside of the pair of handlebars 15, respectively. When the user pushes (strikes) the support pad 14 upward, the support pad 14 rotates in the direction of an arrow RB in FIG. 2 and is fixed at a predetermined position (retracting position) (see a virtual line in FIG. 2). A space for accommodating the upper body of the user is secured above a seat 37. In this state, the user can sit on the seat 37 with the support pad 14 on the back side while holding the pair of grips 23 with both hands. By holding the grips 23, the user can stabilize his/her posture when the user is sitting. In this way, the support pad 14 prevents the user from sitting on the seat 37 of the wheeled walking aid at a position obtained before being pushed up (normal position) and allows the user to sit on the seat 37 of the wheeled walking aid at a position obtained after being pushed up (retracting position).

The configuration in which the user manually pushes up the support pad 14 is shown here. However, as another example, a lock mechanism (not shown) may be provided, and the support pad 14 may be automatically pushed up by releasing the fixation by the lock mechanism. Alternatively, an electric mechanism (motor or the like) for rotating the arm members 26 may be provided, and the support pad 14 may be pushed up by operating the electric mechanism through the activation of the switch.

A storage 27 (see FIG. 2) made of resin or cloth is provided so as to be suspended between the pair of upper frames 54. The storage 27 has a bag shape with an upper part that is open and stores baggage. The seat 37 for seating also functions as a lid of the storage 27.

Behind the storage 27, a lever 28 extending downward from the pair of upper frames 54 is provided. The lever 28 is arranged at a position where the user can step on the lever 28 with his/her legs. When the user lowers the lever 28, the link mechanisms 55 are folded such that the pair of rear wheel frames 57 and the pair of rear wheels 13 approach the pair of front wheels 12, and the entire wheeled walking aid 100 is folded.

[Circuit Configuration]

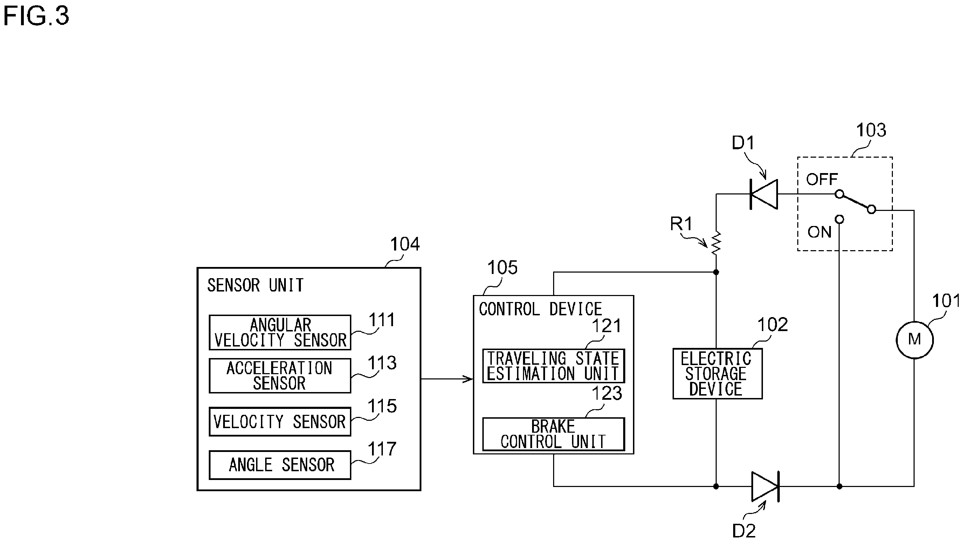

The wheeled walking aid 100 according to FIG. 3 includes a motor generator 101, an electric storage device 102, a switching element (hereinafter, SW element for PWM control) 103 for PWM control, a sensor unit 104, and a control device 105. These items are housed in one housing and are integrally provided with a rear wheel 13 to be controlled. In this case, a housing that houses these items may be attached to each of the pair of rear wheels 13.

The motor generator 101 is connected to the axle of the rear wheel 13 and functions as an electric brake configured to suppress the rotational velocity of the rear wheel 13. The motor generator 101 recovers the kinetic energy generated by the rotation of the rear wheel 13 and stores the kinetic energy in the electric storage device 102. Therefore, the motor generator 101 functions as a regenerative brake or power generation brake. A servo motor, a stepping motor, a motor, a DC motor, etc., can be used as the motor generator 101. The motor generator 101 may be connected to the front wheel 12 or to both the front wheel 12 and the rear wheel 13. The motor generator 101 according to the present embodiment is an example of a power generation mechanism.

The electric storage device 102 is electrically connected to the motor generator 101 and is charged by receiving the supply of regenerative electric power generated by the motor generator 101. The regenerative electric power is generated when the user is actively moving the electric wheeled walking aid. The electric storage device 102 is electrically connected to the control device 105 and supplies electric power to the control device 105. The electric power for driving each piece of hardware is supplied from the electric storage device 102. A battery such as a capacitor or a secondary battery such as a lithium-ion battery is used as the electric storage device 102. The electric storage device 102 can be charged only with regenerative electric power or with an external power source in addition to regenerative electric power.

The SW element 103 for PWM control is a field-effect transistor (FET) and switches the state a circuit between a short circuit and an open circuit for the motor generator 101. The SW element 103 for PWM control is connected to a first terminal 101A and a second terminal 101B of the motor generator 101. The SW element 103 for PWM control is controlled by the control device 105. More details will follow.

The sensor unit 104 includes one or a plurality of sensors and transmits a detection result from each sensor to the control device 105. The sensor unit 104 includes an angular velocity sensor 111 configured to detect the angular velocity of the vehicle around the pitch, roll, and yaw axes, an acceleration sensor 113 configured to detect the acceleration of the wheeled walking aid around the pitch, roll, and yaw axes, a velocity sensor 115 configured to detect the rotational velocity and rotational direction of the rear wheels, and an angle sensor 117 configured to detect the pitch angle, roll angle, and yaw angle of the wheeled walking aid 100. As the angular velocity sensor 111 and the acceleration sensor 113, a 6-axis inertial sensor in which these two sensors are combined may be used. For example, if there is no need to detect the angular velocity and acceleration around the yaw axis, a 4-axis inertial sensor capable of detecting the angular velocity and acceleration around at least the pitch and roll axes may be used. A Hall element may be used as the velocity sensor 115, or the velocity may be calculated from back electromotive force of the motor generator 101. A magnetic field sensor may also be used instead of the acceleration sensor. The detection results from these sensors are transmitted to the control device 105 as signals by a wired or wireless method.

The sensor unit 104 may also include an inclination sensor configured to detect an inclination angle with respect to the pitch axis or the horizontal plane around the pitch axis. If it is not necessary to detect the roll angle, a sensor capable of detecting the angular velocity around the pitch axis and the acceleration in the direction of the roll axis may be used. In order to detect a pitch angle or rotation around the roll axis, only the acceleration needs to be able to be detected, and the angular velocity is not always necessary. The history or change over time of a detected value from the acceleration sensor 113 may be used to detect the inclination angle or the presence of inclination with respect to the horizontal plane, and in this case, the inclination sensor is not necessary. The detected value from the acceleration sensor 113 may be integrated to detect the velocity, and in this case, the velocity sensor 115 is unnecessary. Also, the acceleration in the front-rear direction may be calculated by differentiating the detected value from the velocity sensor 115 without providing the acceleration sensor 113 for detecting the acceleration in the front-rear direction. In this way, the acquisition of the velocity and the acceleration can be achieved by using either one of the acceleration sensor 113 and the velocity sensor 115.

The control device 105 controls a brake configured to apply braking force to the rear wheels by controlling the motor generator 101 using the regenerative electric power. The control device 105 is operated by the regenerative electric power generated in the motor generator 101 by the running of the wheeled walking aid 100. The control device 105 is connected in parallel with the electric storage device 102. The control device 105 is formed by hardware such as a processor configured to performs arithmetic processing such as a micro processing unit (MPU), a memory configured to store information and instructions, and a temporary memory used for arithmetic operations performed by the processor. The control device 105 controls the braking force of the brake by the motor generator 101 by using the detection result obtained from each sensor. For example, the control device 105 calculates the magnitude of the braking force and performs the PWM control on the SW element 103 for PWM control in order to generate the braking force, thereby controlling the braking force.

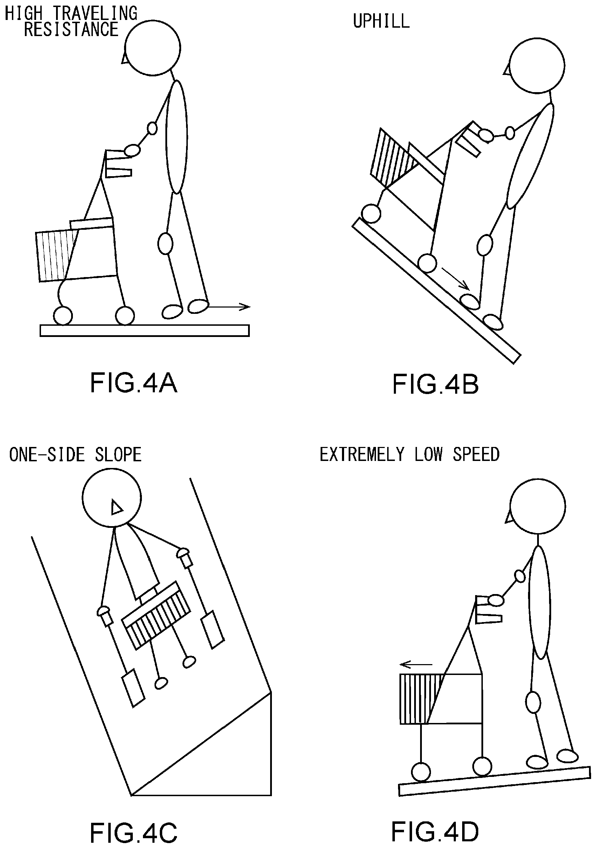

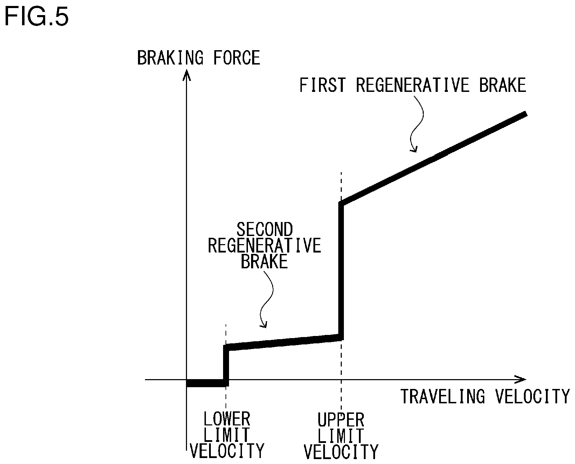

The control device 105 includes a traveling state estimation unit 121 and a brake control unit 123. The traveling state estimation unit 121 estimates the traveling state of the wheeled walking aid 100. Examples of the traveling state to be estimated are shown in FIGS. 4A to 4D. As shown in FIG. 4A, the traveling state estimation unit 121 estimates whether or not the wheeled walking aid 100 is in a state of traveling on a road (e.g., grass, gravel road, etc.) where the traveling resistance is higher than a predetermined resistance threshold (hereinafter referred to as "high resistance traveling state") based on the detection result of the acceleration in the vertical direction during the traveling from the angular velocity sensor 111. As shown in FIGS. 4B and 4C, the traveling state estimation unit 121 estimates whether or not the wheeled walking aid 100 is in a state of traveling on an uphill street or a one-side sloped street (hereinafter referred to as "uphill traveling state" and "on-side slope traveling state", respectively) based on the detection result from the angle sensor 117. As shown in FIG. 4C, the "one-side sloped street" refers to a street that slopes in the left-right direction of the wheeled walking aid. As shown in FIG. 4D, the traveling state estimation unit 121 estimates whether or not the wheeled walking aid 100 is in a state of traveling with a traveling velocity of a predetermined lower limit velocity (e.g., see FIG. 5) or below (hereinafter referred to as "extremely low speed traveling state"). The traveling state estimation unit 121 may capture an image of a traveling road surface and analyze the captured image so as to estimate the traveling state.

Furthermore, the wheeled walking aid 100 of FIG. 3 includes a power supply connection resistor R1 and first and second diodes D1 and D2.

The power supply connection resistor R1 is connected in series with the motor generator 101 and the electric storage device 102. In the present embodiment, the power supply connection resistor R1 is arranged between the off-side terminal of the SW element 103 for PWM control and the electric storage device 102. The resistance value of the power supply connection resistor R1 affects the electric current supplied to the motor generator 101. For example, when the resistance value of the power supply connection resistor R1 is relatively large, a relatively small electric current flows to the motor generator 101, and when the resistance value of the power supply connection resistor R1 is relatively small, a relatively large electric current flows to the motor generator 101. Therefore, the braking force of the motor generator 101 can be adjusted by adjusting the resistance value of the power supply connection resistor R1. In the present embodiment, a resistance smaller than that of the motor generator 101 is used for the power supply connection resistor R1. For example, for a resistance of the motor generator 101 of 0.32 [$\Omega$], the resistance of the power supply connection resistor R1 is 0.1 [$\Omega$]. The power supply connection resistor R1 may be arranged between the electric storage device 102 and the second terminal 101B of the motor generator 101.

The first and second diodes D1 and D2 pass an electric current in a direction from the first terminal 101A to the second terminal 101B of the motor generator 101. The first diode D1 is arranged between the off-side terminal of the SW element 103 for PWM control and the power supply connection resistor R1. The second diode D2 is arranged between the electric storage device 102 and the second terminal 101B of the motor generator 101. Regarding the first and second diodes D1 and D2, only one of the diodes may be used.

A control process performed by the control device 105 will be explained in the following. The operation mainly performed by the control device 105 is realized by the processor referring to instructions and information stored in the memory and executing arithmetic operations on the temporary memory.

[Brake control] As described above, the brake control unit 123 controls the braking force of the regenerative brake applied by the motor generator 101 by PWM control of the SW element 103 for PWM control. In the PWM control, the on and off of the SW element 103 for PWM control is controlled by the brake control unit 123.

The brake control unit 123 outputs a control signal for controlling the on and off of the SW element 103 for PWM control to the SW element 103 for PWM control. This control signal defines the duty ratio of the SW element 103 for PWM control. The duty ratio is the percentage of the ON time of the SW element 103 for PWM control in a pulse cycle.

When the wheeled walking aid 100 travels, the motor generator 101 rotates according to the rotation of the wheels (rear wheels 13) and generates back electromotive force in the motor generator 101. When the SW element 103 for PWM control is off, the motor generator 101 is connected to the electric storage device 102, and the electric storage device 102 is charged by electromotive force (regenerative electric power) generated in the motor generator 101. On the other hand, when the SW element 103 for PWM control is on, the motor generator 101 is short-circuited. When the motor generator 101 is short-circuited, an electric current proportional to the electromotive force and inversely proportional to the resistance of the motor generator 101 flows through the motor generator 101, and a braking torque proportional to the electric current is thus generated. Therefore, the larger the duty ratio, the larger the electric current supplied to the motor generator 101, thus increasing the braking torque. Since the braking torque is an average of braking torques weighted by respective duty ratios in the on state and in the off state, the breaking torque increases as the duty ratio increases.

As shown in FIG. 5, when the traveling velocity of the wheeled walking aid 100 is larger than a predetermined upper limit velocity, the brake control unit 123 activates a first regenerative brake to suppress the traveling velocity such that the traveling velocity becomes a predetermined traveling velocity. This allows for traveling at a constant velocity. In this case, the brake control unit 123 acquires the detected value from the velocity sensor 115 and monitors the detected value. When the first regenerative brake is activated, for example, the motor generator 101 generates a braking force so as to suppress the rotational velocity of the rear wheels 13. This suppresses the velocity of the wheeled walking aid 100, enhancing safety.

When the traveling velocity of the wheeled walking aid 100 is the predetermined upper limit velocity or less, the brake control unit 123 activates a second regenerative brake, which has a smaller braking force than that of the first regenerative brake. Thereby, a regenerative brake is always activated, and the electric storage device 102 is always charged. Therefore, insufficient charging of the electric storage device 102 is easily solved. In the second regenerative brake, it is preferable to maintain a weak constant braking force that can be ignored by the user.

The brake control unit 123 determines the duty ratio at predetermined time intervals so as to output a predetermined braking torque according to the traveling velocity. However, even when the duty ratio is determined, the voltage supplied to the motor generator 101 fluctuates according to the traveling velocity, the voltage of the electric storage device 102, and the like, and the braking force is thus caused to fluctuate. Therefore, in the present embodiment, the duty ratio for the PWM control is set based on the traveling velocity and the voltage of the electric storage device 102. This allows the pulsation of the braking force to be reduced and thus allows discomfort during use to be reduced.

For example, the brake control unit 123 reduces the duty ratio if the amount of decrease in the voltage of the electric storage device 102 per a predetermined time becomes larger than a first threshold when the traveling velocity is within a predetermined velocity range. Thereby, the fluctuation of the braking force due to a decrease in the voltage of the electric storage device 102 is suppressed.

Further, the brake control unit 123 increases the duty ratio if the amount of increase in the voltage of the electric storage device 102 per a predetermined time becomes larger than a second threshold when the traveling velocity is within the predetermined velocity range. Thereby, the fluctuation of the braking force due to an increase in the voltage of the electric storage device 102 is suppressed.

The first and second thresholds are determined as appropriate according to the design, and the optimum values thereof are determined through experiment or the like.

The brake control unit 123 obtains a duty ratio p by the following method. First, the brake control unit 123 determines a target braking torque T according to the traveling velocity based on a numerical value table of braking torques for traveling velocities prepared in advance.

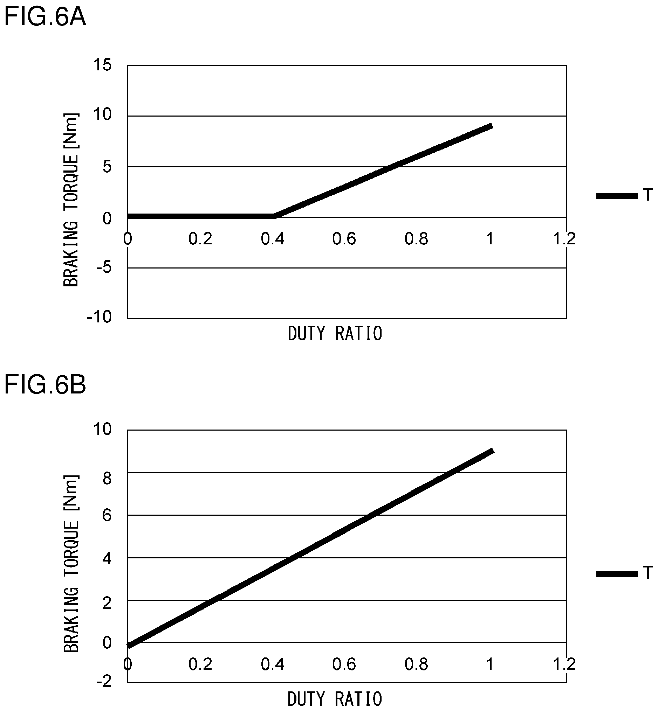

The braking torque T is expressed by the following equation (1), as shown in the relationship between the duty ratio p and the braking torque T in FIG. 6A.

$$T = Ap - B \qquad \text{Equation (1)}$$

In Equation (1), A and B represent values larger than 0. A increases as a torque constant of the motor generator 101 and the voltage across the terminals of the electric storage device 102 increase, and A decreases as the impedance of the motor generator 101 increases. Further, B increases as the torque constant of the motor generator 101 and the voltage across the terminals of the electric storage device 102 increase, and B decreases as the traveling velocity and the impedance of the motor generator 101 increase.

When Equation (1) is rearranged with respect to the duty ratio p, the duty ratio p is expressed by the following Equation (2).

$$p = (T + B) / A \qquad \text{Equation (2)}$$

Based on Equation (2), the brake control unit 123 can obtain the duty ratio p required to produce a specific braking torque T.

As shown in FIG. 6A, the braking torque T is zero or less when the value of the duty ratio is a certain value (referred to as "torque generation duty ratio") or less. However, due to the action of the first and second diodes D1 and D2, the braking torque T does not actually become negative. When the torque generation duty ratio is exceeded, the braking torque T increases in a linear manner. Therefore, the duty ratio p needs to be larger than the torque generation duty ratio in order for the braking force to act. The torque generation duty ratio is obtained from p = B / A by substituting zero for T in Equation (2).

If the duty ratio is lowered too much, the braking force may become too small to provide sufficient regenerative electric power, and the control device 105 may not be able to operate. Therefore, in the present embodiment, the lower limit of the duty ratio is set such that a regenerative voltage larger than a voltage at which the control device 105 operates can be generated. This allows the control to be maintained regardless of the power storage amount of the electric storage device 102.

The brake control unit 123 may reduce the braking force of the second regenerative brake based on the estimation result from the traveling state estimation unit 121. For example, by reducing the braking force of the second regenerative brake according to an estimation result indicating that the traveling state corresponds to at least one of the high resistance traveling state, the uphill traveling state, the one-side slope traveling state, and the extremely low speed traveling state shown in FIGS. 4A to 4D, the brake control unit 123 may prevent the second regenerative brake from becoming activated. By reducing the braking force of the second regenerative brake in the high resistance traveling state and the uphill traveling state, the deterioration of driving performance is suppressed. By reducing the braking force of the second regenerative brake in the one-side slope traveling state, snaking toward the down-slope direction is suppressed, and the deterioration of traveling stability is suppressed. By reducing the braking force of the second regenerative brake in the extremely low speed traveling state, the overall power consumption of the wheeled walking aid 100 is suppressed from becoming larger than the amount of regenerative electric power obtained by the second regenerative brake.

According to the present embodiment, since the brakes are controlled by regenerative electric power, a failure of the wheeled walking aid 100 in proper operation during use is suppressed. Further, it is no longer necessary to, for example, connect the wheeled walking aid 100 to an external power source to charge the battery.

[Exemplary variation]

In the present embodiment, the first regenerative brake is activated such that the traveling velocity is constant in a given case. However, this is non-limiting, and a mechanical brake may be activated such that the traveling velocity is constant.

In the present embodiment, PWM control is performed based on the above Equations (1) to (5). However, this is non-limiting, and the PWM control may be performed based on a numerical value table for duty ratios for the current traveling velocity. In this numerical value table, for example, a duty ratio for achieving the braking force such as those shown in FIG. 5 is set for each traveling velocity.

The braking force may be adjusted based on the inclination angle of the ground measured using a 6-axis inertial sensor or the like. A Hall element may be provided in the motor generator 101, and the braking force may be adjusted based on the traveling velocity and the acceleration measured using the Hall element. The back electromotive force generated by the motor generator 101 may be measured using a voltage sensor or the like, and the braking force may be adjusted based on the traveling velocity and the acceleration measured using the measured back electromotive force.

<Second Embodiment>

In the figures and explanations of the second embodiment, the same or equivalent constituting elements and members as those in the first embodiment shall be denoted by the same reference numerals. Explanations that are the same as those in the first embodiment are appropriately omitted, and an explanation will be given focusing on features that are different from those of the first embodiment.

In the first embodiment, as shown in FIG. 6A, the braking torque is almost zero when the duty ratio is the torque generation duty ratio or less and rapidly increases when the duty ratio exceeds the torque generation duty ratio. Since the torque generation duty ratio depends on the traveling velocity and the voltage of the electric storage device 102, the calculation of the duty ratio is relatively complex. Also, there is a concern that if the traveling velocity and the voltage of the electric storage device 102 change even a little bit, the braking force would change with the change in the torque generation duty ratio, causing some loss of smoothness in traveling.

The resistance of the power supply connection resistor R1 according to the present embodiment is larger than the resistance of the motor generator 101. For example, for a resistance of the motor generator 101 of 0.32 [Ω], the resistance of the power supply connection resistor R1 is 10 [Ω]. As a result, fluctuation in the torque generation duty ratio due to fluctuation in the voltage of the electric storage device 102 or in the traveling resistance is negligibly small.

FIG. 6B shows the relationship between the duty ratio and braking torque in the present embodiment. As shown in FIG. 6B, the torque generation duty ratio in the present embodiment is close to zero. Further, the braking torque increases linearly with respect to the duty ratio.

Since the torque generation duty ratio is close to zero and is thus negligible, if B/A in Equation (2) is set to zero, the brake control unit 123 according to the present embodiment sets the duty ratio based on the following Equation (3).

$$p = T / A \qquad \text{Equation (3)}$$

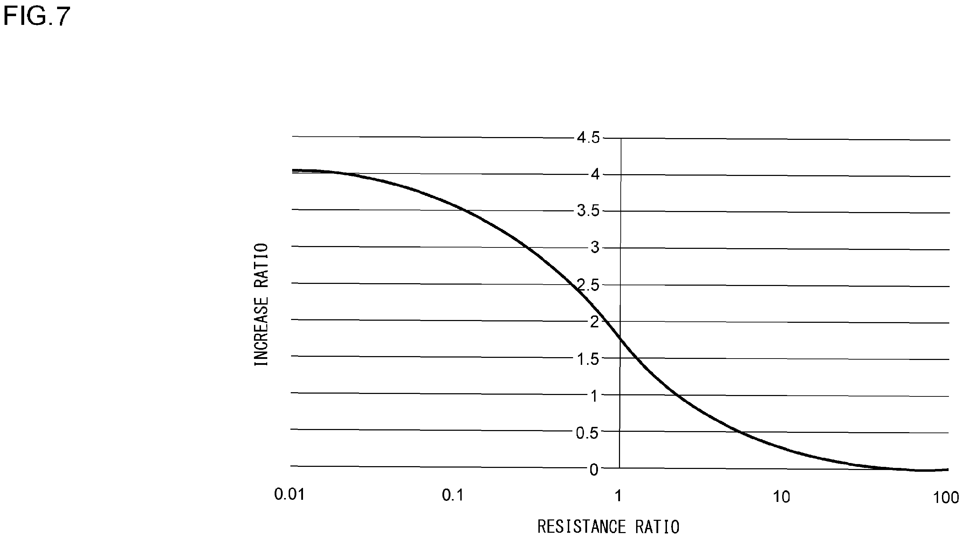

Using FIG. 7, an explanation will be given regarding the amount of increase in an electric current flowing through the motor generator 101 when the regenerative electric power fluctuates due to fluctuation in the traveling velocity based on the resistance of the power supply connection resistor R1 and the resistance of the motor generator 101. The smaller this amount of increase is, the higher the robustness of the braking force with respect to the fluctuation in the traveling velocity is. In FIG. 7, the horizontal axis shows the ratio of the resistance of the power supply connection resistor R1 to the resistance of the motor generator 101 (resistance ratio), and the vertical axis shows the ratio of the amount of increase (increase ratio) in an electric current flowing through the motor generator 101 to the amount of increase in the regenerative voltage (increase ratio). In FIG. 7, the duty ratio p is adjusted such that an electric current of 0.1 [A] flows through the motor generator 101 under a condition that the regenerative voltage is 2.5 [V], the voltage of the electric storage device 102 is 5 [V], the voltage across the terminals (voltage drop) due to the first diode D1 is 0.6 [V], and the resistance of motor generator 101 is 0.32 [Ω].

In the first embodiment, the resistance ratio is 0.3125 since the resistance of the power supply connection resistor R1 is 0.1 [Ω] and the resistance of the motor generator 101 is 0.32 [Ω]. Therefore, as shown in FIG. 7, the increase ratio in the first embodiment is around 3 to 3.5. On the other hand, the resistance ratio in the present embodiment is about 31.25. Therefore, as shown in FIG. 7, the increase ratio in the present embodiment is around 0.1 to 0.3. Therefore, in the present embodiment, the robustness of the braking force with respect to the fluctuation in the traveling velocity is higher than that in the first embodiment.

According to the present embodiment, the braking force is less likely to be affected by the fluctuation in the torque generation duty ratio, and the duty ratio can be calculated with a relatively small calculation load. As a result, the fluctuation in the braking force is suppressed. Therefore, the smoothness in traveling is further increased.

<Third Embodiment>

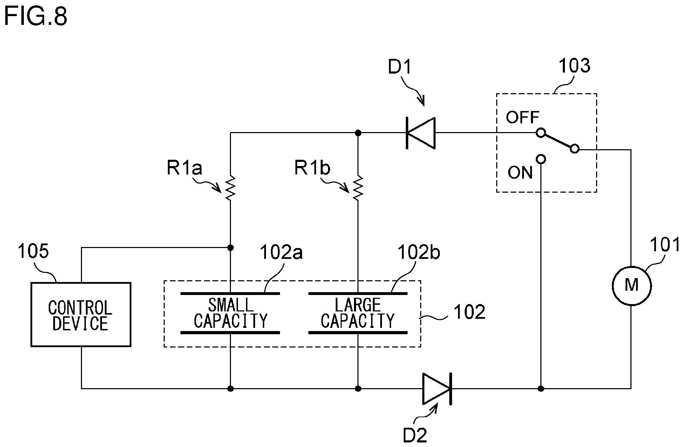

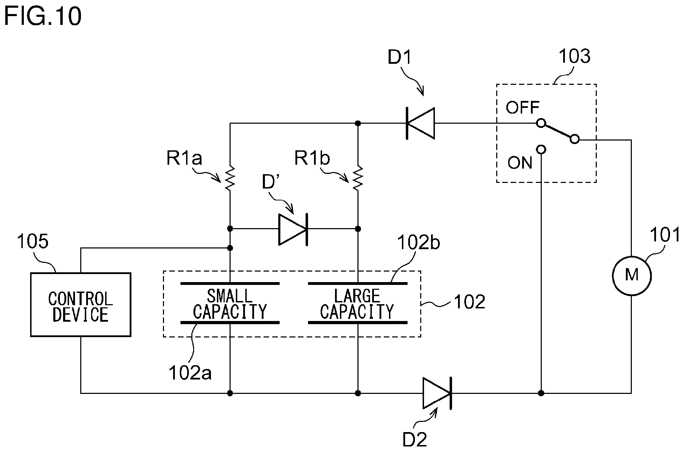

In the figures and explanations of the third embodiment, the same or equivalent constituting elements and members as those in the first embodiment shall be denoted by the same reference numerals. Explanations that are the same as those in the first embodiment are appropriately omitted, and an explanation will be given focusing on features that are different from those of the first embodiment. In FIG. 8 below, the sensor unit 104 is omitted for the sake of simplification. In the same way, the sensor unit 104 is omitted in FIGS. 10 to 13 described later.

As shown in FIG. 8, an electric storage device 102 in the present embodiment includes a first electric storage unit 102a and a second electric storage unit 102b having a larger capacity than the first electric storage unit 102a. The first electric storage unit 102a and the second electric storage unit 102b are connected in parallel. A first power supply connection resistor R1a is connected to the first electric storage unit 102a, and a second power supply connection resistor R1b is connected to the second electric storage unit 102b. The resistance of the second power supply connection resistor R1b is larger than that of the first power supply connection resistor R1a. The first electric storage unit 102a and the second electric storage unit 102b according to the present embodiment are capacitors.

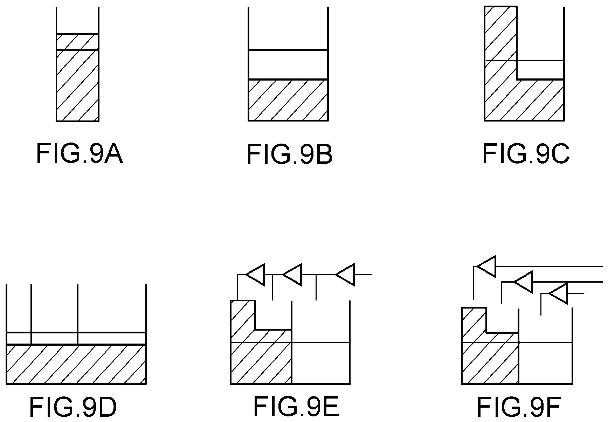

As shown in FIG. 9A, since the capacity of the first electric storage unit 102a is relatively small, when regenerative electric power is supplied, the voltage of the first electric storage unit 102a quickly rises to the operating voltage of the control device 105. However, the power storage amount is small. Further, the braking torque tends to fluctuate when the traveling velocity fluctuates.

On the other hand, as shown in FIG. 9B, since the capacity of the second electric storage unit 102b is relatively large, the power storage amount is large. However, even when regenerative electric power is supplied, it takes time until the voltage of the second electric storage unit 102b rises to the operating voltage of the control device 105 so as to cause the control device 105 to operate.

In the present embodiment, the first electric storage unit 102a and the second electric storage unit 102b configured to have different capacities are connected in parallel. As shown in FIG. 9C, when regenerative electric power is supplied, although both the first electric storage unit 102a and the second electric storage unit 102b are charged, the voltage of the first electric storage unit 102a having a relatively small capacity reaches the operating voltage of the control device first. As a result, the operating voltage of the control device 105 is obtained early. In addition, since the second electric storage unit 102b having a relatively large capacity is charged even after the voltage of the first electric storage unit 102a reaches the operating voltage of the control device 105, a sufficient power storage amount can be obtained.

As might be expected, the electric storage device 102 may include three or more electric storage units that are connected in parallel and each have a different capacity. As shown in FIG. 10, a diode D' may be arranged between the terminal located between the first electric storage unit 102a and the first power supply connection resistor R1a and the terminal located between the second electric storage unit 102b and the second power supply connection resistor R1b.

<Fourth Embodiment>

In the figures and explanations of the fourth embodiment, the same or equivalent constituting elements and members as those in the third embodiment shall be denoted by the same reference numerals. Explanations that are the same as those in the third embodiment are appropriately omitted, and an explanation will be given focusing on features that are different from those of the third embodiment.

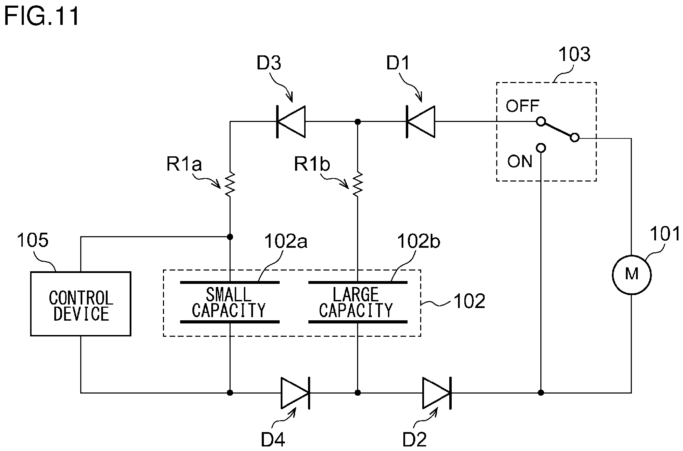

As shown in FIG. 11, a wheeled walking aid 100 according to the present embodiment includes third and fourth diodes D3 and D4 connected to a first electric storage unit 102a and a second electric storage unit 102b, respectively. In the present embodiment, the first and third diodes D1 and D3 are connected in series, and the second and fourth diodes D2 and D4 are connected in series. The first through fourth diodes D1-D4 pass an electric current in a direction from the first terminal 101A to the second terminal 101B of the motor generator 101.

When the electromotive force from the regeneration runs out, there are cases when an electric current flows back from the first electric storage unit 102a to the second electric storage unit 102b and the power storage amount is smoothed between the first electric storage unit 102a and the second electric storage unit 102b as shown in FIG. 9D. In this case, it takes time for the voltage of the electric storage device 102 to reach the operating voltage of the control device 105.

According to this configuration, since the first and third diodes D1 and D3 are connected in series, the backflow of an electric current from the first electric storage unit 102a to the second electric storage unit 102b is suppressed. As a result, as shown in FIG. 9E, the smoothing of the power storage amount between the first electric storage unit 102a and the second electric storage unit 102b is suppressed.

<Fifth Embodiment>

In the figures and explanations of the fifth embodiment, the same or equivalent constituting elements and members as those in the fourth embodiment shall be denoted by the same reference numerals. Explanations that are the same as those in the fourth embodiment are appropriately omitted, and an explanation will be given focusing on features that are different from those of the fourth embodiment.

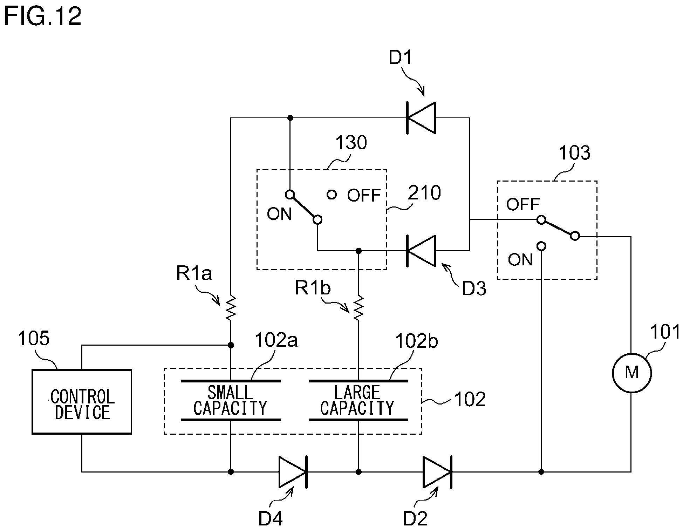

As shown in FIG. 12, in the present embodiment, the first and third diodes D1 and D3 are connected in parallel. Further, between the cathode side terminals of the first and third diodes D1 and D3, an SW element 130 for electric storage control is electrically connected. As the SW element 130 for electric storage control, a field effect transistor (FET) is used.

When the first and third diodes D1 and D3 are connected in series, a voltage drop due to the first and third diodes D1 and D3 is large.

In contrast, according to the present embodiment, the voltage drop due to the first and third diodes D1 and D3 is suppressed.

An explanation will be given regarding the control of the SW element 130 for electric storage control. When the control device 105 is not started, the SW element 130 for electric storage control is in an off state. In the off state, the first diode D1, the first power supply connection resistor R1a, and the first electric storage unit 102a are connected in parallel to the second diode D2, the second power supply connection resistor R1b, and the second electric storage unit 102b. When the wheeled walking aid 100 travels generating regenerative electric power, an electric current flows to the first electric storage unit 102a from the motor generator 101 via the first diode D1 and to the second electric storage unit 102b from the motor generator 101 via the third diode D3, separately. The voltage in the first electric storage unit 102a then reaches the operating voltage of the control device 105 first, and the control device 105 operates. Meanwhile, the backflow of the electric current from the first electric storage unit 102a to the second electric storage unit 102b is suppressed by the first and third diodes D1 and D3.

However, when the SW element 130 for electric storage control is in the off state, while the first electric storage unit 102a supplies voltage to the control device 105, the second electric storage unit 102b cannot supply voltage to the control device 105 due to the action of the third diode D3. Therefore, in the off state, the power storage amount of the electric storage device 102, which has a relatively small capacity, is substantially equal to the power storage amount of the first electric storage unit 102a, and only a small amount of power storage can be obtained.

In order to avoid this, after finishing operation, the control device 105 switches on the SW element 130 for electric storage control. Thereby, the first and second diodes D1 and D2 do not become connected in parallel, and the first power supply connection resistor R1a and the first electric storage unit 102a become connected in parallel to the second power supply connection resistor R1b and the second electric storage unit 102b. As a result, the composite voltage of the first electric storage unit 102a and the second electric storage unit 102b is supplied to the control device 105. Therefore, in an on state, since the power storage amount of the electric storage device is the sum of the power storage amount of the first electric storage unit 102a and the power storage amount of the second electric storage unit 102b, a large power storage amount can be obtained.

<Sixth Embodiment>

In the figures and explanations of the sixth embodiment, the same or equivalent constituting elements and members as those in the first embodiment shall be denoted by the same reference numerals. Explanations that are the same as those in the first embodiment are appropriately omitted, and an explanation will be given focusing on features that are different from those of the first embodiment.

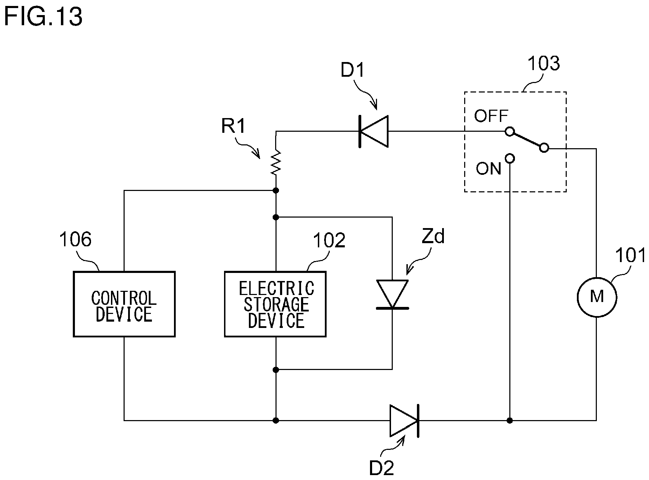

As shown in FIG. 13, a wheeled walking aid 100 according to the present embodiment includes a Zener diode Zd connected in parallel to the electric storage device 102. According to the present configuration, when the power storage amount of the electric storage device 102 increases sufficiently such that it is difficult for an electric current to flow through the electric storage device 102, the electric current is bypassed via the Zener diode Zd. Therefore, since the loss of an electric current flow to the motor generator 101 is suppressed, the loss of a braking force is suppressed, and the electric storage device 102 is prevented from failing due to voltage in excess of the withstand voltage.

[INDUSTRIAL APPLICABILITY]

The present invention relates to electric wheeled walking aids.

[DESCRIPTION OF THE REFERENCE NUMERALS]

main body frame 11, front wheel 12, rear wheel

13, support pad 14, handlebar 15, brake lever 16, support frame 21, grip 23, handle 24, brake shoe 25, arm member 26, storage 27, lever 28, seat 37, lower frame 51, upper frame 54, link mechanism 55, shaft 56, rear wheel frame 57, brake unit 61, wheeled walking aid
100, motor generator 101, first terminal 101A, second terminal 101B, electric storage device 102, first electric storage unit 102a, second electric storage unit
102b, SW element for PWM control 103, sensor unit
104, control device 105, power supply connection resistor R1, angular velocity sensor 111, acceleration sensor 113, velocity sensor 115, angle sensor 117, traveling state estimation unit 121, brake control unit
123, SW element for electric storage control 130

## Claims

1. An electric wheeled walking aid comprising:

   wheels provided on a body of the electric wheeled walking aid;
   a power generation mechanism configured to generate regenerative electric power in accordance with the rotation of the wheels; and
   a control device configured to control a brake that applies braking force to the wheels using the regenerative electric power generated by the power generation mechanism.

2. The electric wheeled walking aid according to claim 1, wherein the regenerative electric power is generated when a user is actively moving the electric wheeled walking aid.

3. The electric wheeled walking aid according to claim 1 or 2, wherein the control device always activates a regenerative brake applied by the power generation mechanism.

4. The electric wheeled walking aid according to any one of claims 1 through 3, wherein the control device includes a traveling state estimation unit configured to estimate the traveling state of the electric wheeled walking aid, wherein the control device activates a regenerative brake applied by the power generation mechanism based on an estimation result from the traveling state estimation unit.

5. The electric wheeled walking aid according to claim 4, wherein the control device reduces the braking force of the regenerative brake according to an estimation result from the traveling state estimation unit indicating that the traveling state corresponds to at least one of a high resistance traveling state, an uphill traveling state, a one-side slope traveling state, and an extremely low speed traveling state.

6. The electric wheeled walking aid according to any one of claims 1 through 4, comprising an electric storage device configured to store the regenerative electric power.

7. The electric wheeled walking aid according to claim 6, comprising:

   a switching element configured to be able to can adjust voltage to be supplied to the power generation mechanism by PWM control; and
   a power supply connection resistor electrically connected in series between the power generation mechanism and the electric storage device and whose resistance is larger than the resistance of the power generation mechanism, wherein
   the control device sets the duty ratio of the PWM control based on the traveling velocity of the electric wheeled walking aid.

8. The electric wheeled walking aid according to claim 7, comprising a Zener diode connected in parallel to the electric storage device.

9. The electric wheeled walking aid according to claim 6, comprising:

a switching element unit configured to be able to adjust voltage supplied to the power generation mechanism by PWM control, wherein

the control device sets the duty ratio of the PWM control based on the traveling velocity of the electric wheeled walking aid and the voltage of the electric storage device.

10. The electric wheeled walking aid according to claim 9, wherein the control device reduces the duty ratio if the amount of decrease in the voltage of the electric storage device becomes larger than a first threshold when the traveling velocity is within a predetermined velocity range.

11. The electric wheeled walking aid according to claim 9 or 10, wherein the lower limit of the duty ratio is set such that a regenerative voltage larger than a voltage at which the control device operates can be generated in the power generation mechanism.

12. The electric wheeled walking aid according to any one of claims 9 through 11, wherein the control device increases the duty ratio if the amount of increase in the voltage of the electric storage device becomes larger than a second threshold when the traveling velocity is within a predetermined velocity range.

13. The electric wheeled walking aid according to claim 6, wherein the electric storage device includes a plurality of electric storage units of different capacities that are connected in parallel.

14. The electric wheeled walking aid according to claim 13, comprising a plurality of diodes connected respectively to the plurality of electric storage units such that a backflow of an electric current from the electric storage units is suppressed.

15. The electric wheeled walking aid according to claim 14, wherein the plurality of diodes are connected in parallel.

FIG.1

# FIG.2

FIG.3

HIGH TRAVELING RESISTANCE

FIG.4A

UPHILL

FIG.4B

ONE-SIDE SLOPE

FIG.4C

EXTREMELY LOW SPEED

FIG.4D

FIG.5

FIG.6A

FIG.6B

FIG.7

FIG.8

FIG.9A

FIG.9B

FIG.9C

FIG.9D

FIG.9E

FIG.9F

FIG.10

FIG.11

EP 4 082 508 A1

FIG.12

FIG.13

## INTERNATIONAL SEARCH REPORT

| | International application No. |
|---|---|
| | PCT/JP2020/047867 |

### A. CLASSIFICATION OF SUBJECT MATTER
Int. Cl. A61H3/04(2006.01)i, A61G5/04(2013.01)i, A61G5/10(2006.01)i
FI: A61H3/04, A61G5/04 710, A61G5/10 717

According to International Patent Classification (IPC) or to both national classification and IPC

### B. FIELDS SEARCHED

Minimum documentation searched (classification system followed by classification symbols)
Int. Cl. A61H3/04, A61G5/04, A61G5/10

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-29891 A (TOYO UNIVERSITY) 16 February | 1-2 |
| Y | 2015, paragraphs [0037], [0038], [0044] | 3-15 |
| Y | JP 2010-30539 A (PANASONIC CORP.) 12 February 2010, paragraphs [0016]-[0019], [0086]-[0092], [0099]-[0106] | 3-15 |
| Y | WO 2014/045858 A1 (MURATA MFG. CO., LTD.) 27 March 2014, paragraphs [0012], [0081] | 3-15 |
| Y | JP 2004-216997 A (NISSAN MOTOR CO., LTD.) 05 August 2004, paragraphs [0015], [0016], [0025]-[0028], [0044], fig. 5 | 7-15 |

☒ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18.01.2021 | 02.02.2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/047867

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2002-166456 A (TOKIMEC INC.) 11 June 2002, paragraphs [0019], [0021] | 13-15 |

Form PCT/ISA/210 (continuation of second sheet) (January 2015)

**INTERNATIONAL SEARCH REPORT**

Information on patent family members

International application No.

PCT/JP2020/047867

| Patent Documents referred to in the Report | Publication Date | Patent Family | Publication Date |
|---|---|---|---|
| JP 2015-29891 A | 16.02.2015 | (Family: none) | |
| JP 2010-30539 A | 12.02.2010 | (Family: none) | |
| WO 2014/045858 A1 | 27.03.2014 | (Family: none) | |
| JP 2004-216997 A | 05.08.2004 | (Family: none) | |
| JP 2002-166456 A | 11.06.2002 | (Family: none) | |

Form PCT/ISA/210 (patent family annex) (January 2015)

**EP 4 082 508 A1**

**REFERENCES CITED IN THE DESCRIPTION**

**Patent documents cited in the description**

- JP 2009183407 A
- JP H8280763 B
- JP H11267162 B